(19) Europäisches Patentamt / European Patent Office / Office européen des brevets

(11) **EP 4 041 041 B1**

## (12) EUROPEAN PATENT SPECIFICATION

(45) Date of publication and mention
of the grant of the patent:
**11.12.2024 Bulletin 2024/50**

(21) Application number: **20874271.8**

(22) Date of filing: **08.06.2020**

(51) International Patent Classification (IPC):
**G05D 1/00** *(2024.01)*   **A47L 9/28** *(2006.01)*
**B25J 9/16** *(2006.01)*   **B25J 11/00** *(2006.01)*

(52) Cooperative Patent Classification (CPC):
**A47L 9/2852; A47L 9/2857; A47L 9/2894;**
**G05D 1/0295;** A47L 2201/04

(86) International application number:
**PCT/KR2020/007377**

(87) International publication number:
**WO 2021/071049 (15.04.2021 Gazette 2021/15)**

(54) **ROBOT CLEANER AND METHOD FOR CONTROLLING THE SAME**

REINIGUNGSROBOTER UND VERFAHREN ZUR STEUERUNG DAVON

ROBOT DE NETTOYAGE ET PROCÉDÉ DE COMMANDE DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.10.2019 KR 20190123855**

(43) Date of publication of application:
**17.08.2022 Bulletin 2022/33**

(73) Proprietor: **LG ELECTRONICS INC.
Yeongdeungpo-gu
Seoul 07336 (KR)**

(72) Inventor: **KWAK, Donghoon
Seoul 08592 (KR)**

(74) Representative: **Ter Meer Steinmeister & Partner
Patentanwälte mbB
Nymphenburger Straße 4
80335 München (DE)**

(56) References cited:
EP-A1- 3 667 450   WO-A1-2019/031168
JP-A- 2005 192 609   KR-A- 20140 094 259
KR-A- 20180 048 705   KR-A- 20180 076 854
KR-B1- 101 450 843   US-A1- 2015 297 052

## Description

### Technical Field

The present disclosure relates to a robot cleaner and a method for controlling the same. More specifically, the present disclosure relates to a robot cleaner in which a posterior cleaner may follow an anterior cleaner even when the posterior cleaner does not sense a position of the anterior cleaner temporarily, and a method for controlling the same.

### Background Art

A cleaner is an apparatus that performs a cleaning function by inhaling dust and foreign substances or mopping. In general, the cleaner performs the cleaning function for a floor, and the cleaner includes a wheel for movement. In general, the wheel is rolled by an external force applied to a cleaner body to move the cleaner body relative to the floor.

However, as a robot cleaner that performs cleaning while autonomously traveling without user manipulation has been developed, there is a need for development to allow a plurality of robot cleaners to collaborate with each other and perform the cleaning without the user manipulation.

WO 2017/036532 discloses a method for controlling, by a master robot cleaning device (hereinafter, a master robot) at least one slave robot cleaning device (hereinafter, a slave robot). The prior art document discloses a configuration in which the master robot detects a surrounding obstacle using an obstacle detection device and determines a position of the master robot associated with the slave robot using position data derived from the obstacle detection device. In order to determine, by the slave robot, the position of the master robot using the configuration disclosed in the prior art document, the master robot should transmit relative position information of the slave robot determined by the master robot to the slave robot through a server.

However, in the prior art document, the master robot and the slave robot are in communication with each other through the server. Thus, when the master robot or the slave robot is located in a place where the communication with the server is difficult, the communication with the server may be lost. In this case, because the slave robot is not able to receive the relative position information from the server, there is a problem that the slave robot is difficult to determine a relative position of the master robot. Accordingly, there is a problem that following control of the master robot and the slave robot is not smoothly performed. US 2015/297052 A1 discloses a self-propelled floor cleaning device including a manually controlled or program-controlled first cleaning vehicle, which moves across a treatment path across a surface, which is to be cleaned, and includes a first cleaning device for carrying out a dry-cleaning step. A second cleaning vehicle, including a second cleaning device for carrying out a wet cleaning step, is coupled to the first cleaning vehicle such that the second cleaning vehicle follows the first cleaning vehicle on the treatment path thereof. The second cleaning vehicle can be connected to the first cleaning vehicle via a releasable mechanical coupling. However, it can also be in operative connection with the first cleaning vehicle via only a data transmission path.

WO 2019/031168 A1 discloses a moving object and a method of controlling the moving object. More specifically, it discloses a movable body that carries out formation traveling when a plurality of moving bodies travels on the same orbit, and a method of controlling these moving bodies.

### Disclosure of Invention

### Technical Problem

The present disclosure is to provide a robot cleaner that may perform cleaning in an optimized manner without user intervention, and a method for controlling the same.

The present disclosure is to provide a robot cleaner in which a posterior cleaner may follow an anterior cleaner even when the posterior cleaner does not sense a position of the anterior cleaner temporarily, and a method for controlling the same.

Further, the present disclosure is to provide a robot cleaner that may improve accuracy of position determination by updating relevant information in preparation for a situation in which a posterior cleaner does not sense a position of an anterior cleaner in a state in which the posterior cleaner senses the position of the anterior cleaner, and a method for controlling the same.

### Solution to Problem

The present disclosure provides a robot cleaner including a driver for linearly moving or turning a body of the robot cleaner, a sensor for sensing a further cleaner in a sensed region, a communicator connected to a network, wherein the communicator acquires position information of the further cleaner, and a controller for controlling the driver. When the further cleaner is out of the sensed region, the robot cleaner controls the driver using the position information transmitted from the communicator.

Unlike the sensor, the communicator of the robot cleaner may receive the information associated with the further cleaner through the network. The network has a wider range for receiving a signal compared to the sensed region of the sensor. Therefore, even when the further cleaner is out of the sensed region, the robot cleaner may acquire the information about the position of the further cleaner and follow the further cleaner.

The present disclosure provides a robot cleaner including a driver for linearly moving or turning a body of the robot cleaner, a sensor for sensing a further cleaner in a sensed region having a predetermined angular range in front of the body, a communicator connected to a network, wherein the communicator acquires position information of the further cleaner, and a controller that, when the further cleaner is out of the sensed region of the sensor, identifies a position of the robot cleaner relative to the further cleaner based on the position information acquired by the communicator and a conversion matrix, and controls the driver such that the body follows the further cleaner.

The present disclosure provides a method for controlling a robot cleaner including a first operation in which the robot cleaner determines whether a further robot cleaner is present in a sensed region of a sensor of the robot cleaner, and a second operation including, when the further robot cleaner is present in the sensed region of the sensor, controlling a driver of the robot cleaner such that a body of the robot cleaner follows the further robot cleaner based on information acquired from the sensor, when the further robot cleaner is not present in the sensed region of the robot cleaner, identifying a position of the robot cleaner relative to the further robot cleaner based on information acquired from a communicator of the robot cleaner, and based on a conversion matrix, wherein the communicator is connected to a network to receive position information of the further robot cleaner, and controlling the driver of the robot cleaner based on the identified position, such that the body of the robot cleaner follows the further cleaner.

In the present disclosure, the robot cleaner may be controlled follow the further cleaner based on the conversion matrix and the position information of the further cleaner transmitted from the communicator of the robot cleaner even when the further cleaner is present in the sensed region of the sensor of the robot cleaner.

## Advantageous Effects of Invention

According to the present disclosure, a plurality of autonomous cleaners capable of accurately identifying a relative position of a further cleaner may be provided.

According to the present disclosure, a robot cleaner that may perform smooth following travel by following a further cleaner without missing the further cleaner even when the further cleaner travels and leaves the sensed region of the robot cleaner may be provided.

The present disclosure is to provide a robot cleaner that may improve accuracy of position determination by updating relevant information in preparation for a situation in which the robot cleaner does not sense a position of a further cleaner in a state in which the robot cleaner senses the position of the further cleaner, and a method for controlling the same.

## Brief Description of Drawings

FIG. 1 is a perspective view illustrating an example of an autonomous cleaner according to the present disclosure.

FIG. 2 is a plan view of an autonomous cleaner illustrated in FIG. 1.

FIG. 3 is a side view of an autonomous cleaner illustrated in FIG. 1.

FIG. 4 is a block diagram illustrating exemplary components of an autonomous cleaner according to an embodiment of the present disclosure.

(a) FIG. 5 is a conceptual diagram illustrating network communication between a plurality of autonomous cleaners according to an embodiment of the present disclosure, (b) in FIG. 5 is a conceptual diagram illustrating an example of network communication in (a) in FIG. 5, and (c) in FIG. 5 is a conceptual diagram for describing following travel of a plurality of autonomous cleaners according to an embodiment of the present disclosure.

(a) in FIG. 6, (b) in FIG. 6, and (c) in FIG. 6 are conceptual diagrams for describing following registration and following control between a first cleaner and a mobile device according to a variation embodiment of the present disclosure.

FIG. 7 is a flowchart for describing a control method according to an embodiment.

FIG. 8 is a conceptual diagram for describing a control method shown in FIG. 7.

FIG. 9 is a diagram for describing position determination in detail.

**Mode for the Invention**

Embodiments disclosed herein will be described in detail with reference to the accompanying drawings. It should be noted that technical terms used herein are only used to describe a specific embodiment, and are not intended to limit the spirit of the technology disclosed herein.

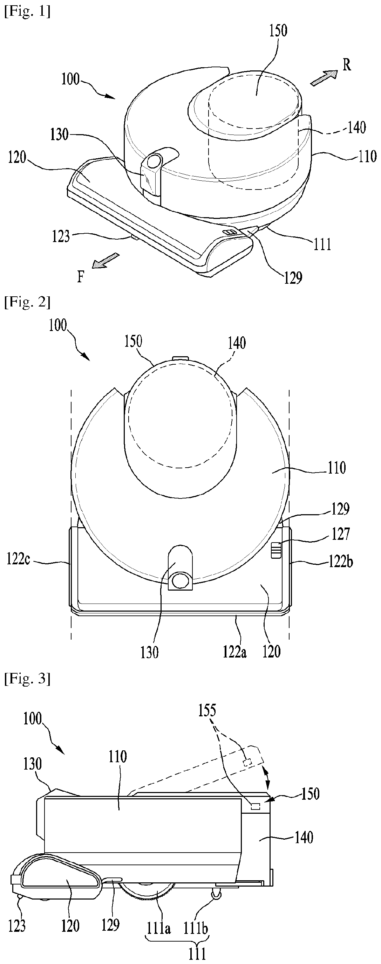

FIG. 1 is a perspective view illustrating an example of an autonomous cleaner 100 according to the present disclosure. FIG. 2 is a plan view of the autonomous cleaner 100 illustrated in FIG. 1. In addition, FIG. 3 is a side view of the autonomous cleaner 100 illustrated in FIG. 1.

In this specification, a mobile robot, an autonomous cleaner, and a cleaner performing autonomous travel may be used in the same sense. Moreover, in this specification, a plurality of autonomous cleaners may include at least some of components illustrated in FIGS. 1 to 3 below.

Referring to FIGS. 1 to 3, the autonomous cleaner 100 performs a function of cleaning a floor while autonomously traveling in a certain region. The cleaning of the floor referred to herein includes inhalation of dust (including foreign substances) on the floor, and mopping of the floor.

The autonomous cleaner 100 may include a cleaner body 110, a cleaning unit 120, a sensing unit 130, and a dust collection vessel 140.

Various parts including a controller (not shown) for controlling the autonomous cleaner 100 are embedded or mounted in the cleaner body 110. Moreover, the cleaner body 110 is equipped with a wheel unit 111 for the travel of the autonomous cleaner 100. The autonomous cleaner 100 may move in a front and rear direction and a left and right direction and turn by the wheel unit 111.

Referring to FIG. 3, the wheel unit 111 includes a main-wheel 111a and a sub-wheel 111b.

The main-wheels 111a are respectively arranged on both sides of the cleaner body 110, and are rotatable in one direction or in the other direction in response to a control signal of the controller. The main-wheels 111a may be driven independently of each other. For example, the main-wheels 111a may be driven by different motors, respectively. Alternatively, the main-wheels 111a may be driven by a plurality of different shafts arranged in one motor, respectively.

The sub-wheel 111b supports the cleaner body 110 together with the main-wheel 111a, and assists the travel of the autonomous cleaner 100 by the main-wheel 111a. Such sub-wheel 111b may also be disposed on the cleaning unit 120 to be described later.

The controller controls driving of the wheel unit 111, which causes the autonomous cleaner 100 to autonomously travel on the floor.

In one example, the cleaner body 110 is equipped with a battery (not shown) that supplies power to the autonomous cleaner 100. The battery is rechargeable and detachable from a bottom face of the cleaner body 110.

In FIG. 1, the cleaning unit 120 may be disposed in a form of protruding from one side of the cleaner body 110, and may inhale air containing the dust or mop. The one side may be a side where the cleaner body 110 travels in a forward direction F, that is, a front side of the cleaner body 110.

In this drawing, it is shown that the cleaning unit 120 has a shape protruding from the one side of the cleaner body 110 in the forward direction and both the left and right directions. Specifically, a front end of the cleaning unit 120 is disposed at a position forwardly spaced apart from the one side of the cleaner body 110. In addition, left and right ends of the cleaning unit 120 are arranged at positions spaced apart from the one side of the cleaner body 110 in the left and right directions, respectively.

As the cleaner body 110 is formed in a circular shape, and both sides of a rear end of the cleaning unit 120 respectively protrude from the cleaner body 110 in the left and right directions, an empty space, that is, a gap may be defined between the cleaner body 110 and the cleaning unit 120. The empty space is a space defined between left and right ends of the cleaner body 110 and left and right ends of the cleaning unit 120, and has a shape recessed inwardly of the autonomous cleaner 100.

When an obstacle is caught in the empty space, a problem that the autonomous cleaner 100 is not able to move because of the obstacle. In order to prevent this, a cover 129 may be disposed to cover at least a portion of the empty space.

The cover 129 may be disposed on the cleaner body 110 or the cleaning unit 120. In this embodiment, it is shown that the cover 129 protrudes from each of both sides of the rear end of the cleaning unit 120 and covers an outer circumferential face of the cleaner body 110.

The cover 129 is disposed to fill at least a portion of the empty space, that is, the empty space defined between the cleaner body 110 and the cleaning unit 120. Therefore, a structure in which the obstacle may be prevented from being caught in the empty space, or which may be easily separated from the obstacle even when the obstacle is caught in the empty space may be implemented.

The cover 129 protruding from the cleaning unit 120 may be supported on the outer circumferential face of the cleaner body 110.

When the cover 129 protrudes from the cleaner body 110, the cover 129 may be supported on a rear face of the cleaning unit 120. Based on the structure, when the cleaning unit 120 collides with the obstacle, impact may be partially transmitted to the cleaner body 110, so that the impact may be dispersed.

The cleaning unit 120 may be detachably coupled to the cleaner body 110. When the cleaning unit 120 is separated from the cleaner body 110, in replacement of the separated cleaning unit 120, a mop module (not shown) may be detachably coupled to the cleaner body 110.

Therefore, when a user wants to remove the dust on the floor, the user may mount the cleaning unit 120 on the cleaner body 110. Further, when the user wants to mop the floor, the user may install the mop module on the cleaner body 110.

When the cleaning unit 120 is mounted on the cleaner body 110, the mounting may be guided by the cover 129 described above. That is, as the cover 129 is disposed to cover the outer circumferential face of the cleaner body 110, a relative position of the cleaning unit 120 with respect to the cleaner body 110 may be determined.

The cleaning unit 120 may be equipped with a castor 123. The castor 123 assists the travel of the autonomous cleaner 100 and supports the autonomous cleaner 100.

The sensing unit 130 is disposed on the cleaner body 110. As illustrated, the sensing unit 130 may be disposed on one side of the cleaner body 110 where the cleaning unit 120 is located, that is, a front side of the cleaner body 110.

The sensing unit 130 may be disposed to overlap the cleaning unit 120 in an up and down direction of the cleaner body 110. The sensing unit 130 is disposed above the cleaning unit 120 to sense an obstacle or a terrain feature in the front such that the cleaning unit 120 positioned at a frontmost portion of the autonomous cleaner 100 does not collide with the obstacle.

The sensing unit 130 may be configured to additionally perform a sensing function other than such sensing function.

As an example, the sensing unit 130 may include a camera for acquiring an image of a periphery. The camera may include a lens and an image sensor. Moreover, the camera converts the image of the periphery of the cleaner body 110 into an electrical signal that may be processed by the controller. For example, the camera may transmit an electrical signal corresponding to an image of an upper portion to the controller. The electrical signal corresponding to the image of the upper portion may be used by the controller to detect a position of the cleaner body 110.

Moreover, the sensing unit 130 may sense an obstacle such as a wall, furniture, a cliff, and the like on a traveling face or a traveling route of the autonomous cleaner 100. Moreover, the sensing unit 130 may sense a presence of a docking device that performs battery charging. Moreover, the sensing unit 130 may sense ceiling information and map a traveling zone or a cleaning zone of the autonomous cleaner 100.

The dust collection vessel 140 that separates and collects the dust in the inhaled air is detachably coupled to the cleaner body 110.

Moreover, a dust collection vessel cover 150 that covers the dust collection vessel 140 is disposed on the dust collection vessel 140. In one embodiment, the dust collection vessel cover 150 may be hinged to the cleaner body 110 and pivot with respect to the cleaner body 110. The dust collection vessel cover 150 may be fixed to the dust collection vessel 140 or the cleaner body 110, and may be remained in a state of covering a top face of the dust collection vessel 140. In the state in which the dust collection vessel cover 150 is disposed to cover the top face of the dust collection vessel 140, the dust collection vessel cover 150 may prevent the dust collection vessel 140 from being separated from the cleaner body 110.

The dust collection vessel 140 is formed such that a portion of the dust collection vessel 140 is accommodated in a dust collection vessel receiving portion, but the remaining portion of the dust collection vessel 140 protrudes rearwardly of the cleaner body 110 (i.e., in a reverse direction R opposite to the forward direction F).

The dust collection vessel 140 is formed with an inlet through which the air containing the dust is introduced and an outlet through which the separated dust is discharged. When the dust collection vessel 140 is mounted in the cleaner body 110, the inlet and the outlet are in communication with each other through an opening 155 defined in an inner wall of the body 110. Accordingly, an inhale channel and an exhaust channel inside the cleaner body 110 may be formed.

Based on such connection relationship, the air containing the dust introduced through the cleaning unit 120 enters the dust collection vessel 140 through the inhale channel inside the cleaner body 110. The air and the dust are separated from each other through a filter or a cyclone of the dust collection vessel 140. The dust is collected in the dust collection vessel 140, and the air is discharged from the dust collection vessel 140, then flows along the exhaust channel inside the cleaner body 110, and then is finally discharged to the outside through the outlet.

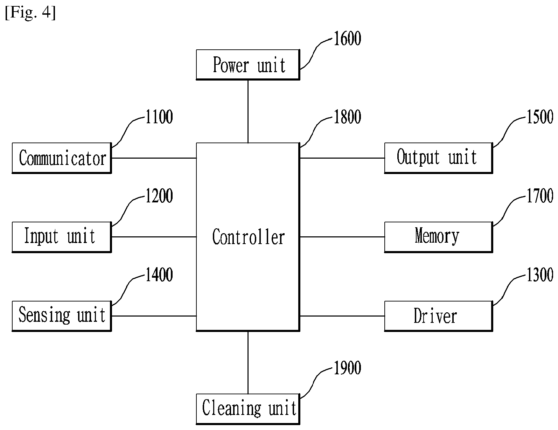

In FIG. 4 below, an embodiment associated with the components of the autonomous cleaner 100 will be described.

The autonomous cleaner 100 or the mobile robot according to an embodiment of the present disclosure may include at least one of a communicator 1100, an input unit 1200, a driver 1300, a sensing unit 1400, an output unit 1500, a power unit 1600, a memory 1700, a controller 1800, and a cleaning unit 1900, or a combination thereof.

In this connection, the components illustrated in FIG. 4 are not essential, so that an autonomous cleaner having more or fewer components may be implemented. Moreover, as described above, the plurality of autonomous cleaners described in the present disclosure may include only some of the components to be described below in common. That is, the plurality of autonomous cleaners may be composed of different components.

Hereinafter, each component will be described.

First, the power unit 1600 is provided with a battery that may be charged by an external commercial power supply to supply power into the mobile robot. The power unit 1600 may supply driving power to each of the components included in the mobile robot, thereby supplying operating power required for the mobile robot to travel or perform a specific function.

In this connection, the controller 1800 senses a remaining battery capacity. When the remaining battery capacity is insufficient, the controller 1800 controls the mobile robot to move to a charging device connected to the external commercial power supply, so that the battery may be charged by receiving a charging current from the charging device. The battery is connected to a battery sensing unit, so that the battery level and a charging state may be transmitted to the controller 1800. The output unit 1500 may display the remaining battery capacity by the controller.

The battery may be located at a lower center of the autonomous cleaner, or may be located on one of the left and right sides of the autonomous cleaner. In the latter case, the mobile robot may further include a balance weight to eliminate weight bias of the battery.

The controller 1800 serves to process information based on an artificial intelligence technology, which may include at least one module that performs at least one of information learning, information inference, information perception, and natural language processing.

The controller 1800 may use a machine learning technology to perform at least one of learning, inference, and processing on vast amounts of information (bigdata), such as information stored in the cleaner, information on an environment around a mobile terminal, information stored in an external communicable storage. In addition, the controller 1800 may predict (or infer) at least one executable operation of the cleaner using information learned using the machine learning technology, and control the cleaner to execute the most feasible operation among the at least one predicted operations.

The machine learning technology is a technology of collecting and learning large-scale information based on at least one algorithm, and determining and predicting information based on the learned information. The information learning is an operation of identifying characteristics, rules, and determination criteria of the information, quantifying a relationship between the information, and predicting new data using a quantified pattern.

The algorithm used by the machine learning technology may be an algorithm based on statistics. For example, the algorithm may be a decision tree that uses a tree structure shape as a prediction model, an artificial neural network that mimics a structure and a function of a neural network of an organism, genetic programming based on an evolution algorithm of the organism, clustering that distributes observed examples into a subset called clusters, a Monte Carlo method that stochastically computes function values through randomly extracted random numbers, and the like.

As a field of the machine learning technology, a deep learning technology is a technology that performs at least one of learning, determining, and processing of information using an artificial neural network (deep neural network, DNN) algorithm. The artificial neural network (DNN) may have a structure of connecting layers with each other and transferring data between the layers. Such deep learning technology may learn vast amounts of information through the artificial neural network (DNN) using a graphic processing unit (GPU) optimized for parallel computation.

The controller 1800 may be equipped with a learning engine that uses training data stored in an external server or memory and detects features for recognizing a predetermined object. In this connection, the features for recognizing the object may include a size, a shape, a shadow, and the like of the object.

Specifically, when the controller 1800 inputs some of the images acquired through the camera disposed on the cleaner to the learning engine, the learning engine may recognize at least one object or living body contained in the input images.

As such, when applying the learning engine to the travel of the cleaner, the controller 1800 may recognize whether an obstacle, such as a chair leg, an electric fan, or a balcony gap of a certain shape, that obstructs the travel of the cleaner exists around the cleaner, thereby increasing efficiency and reliability of the travel of the cleaner.

In one example, the learning engine described above may be mounted on the controller 1800, and may be mounted the external server. When the learning engine is mounted on the external server, the controller 1800 may control the communicator 1100 to transmit at least one image, which is an object to be analyzed, to the external server.

The external server may recognize the at least one object or living body contained in the image by inputting the image received from the cleaner to the learning engine. In addition, the external server may transmit information associated with the recognition result back to the cleaner. In this connection, the information associated with the recognition result may include the number of objects contained in the image, which is the object to be analyzed, and information associated with a name of each object.

In one example, the driver 1300 may be equipped with a motor, and may turn or linearly move the body by rotating the left and right main-wheels in the both directions by driving the motor. In this connection, the left and right main-wheels may move independently of each other. The driver 1300 may move the body of the mobile robot in the front and rear direction and in the left and right direction, and in a curved manner, or may turn the body of the mobile robot at the same place.

In one example, the input unit 1200 receives various control commands for the autonomous cleaner from the user. The input unit 1200 may include at least one button. For example, the input unit 1200 may include an identification button, a setting button, and the like. The identification button is a button for receiving a command for identifying sensing information, obstacle information, position information, and map information from the user, and the setting button is a button for receiving a command for setting the information from the user.

Moreover, the input unit 1200 may include an input resetting button for canceling a previous user input and receiving a user input again, a delete button for deleting a preset user input, a button for setting or changing an operation mode, a button for receiving a command to return to the charging device, and the like.

Moreover, the input unit 1200 includes a hard key, a soft key, a touch pad, and the like, which may be installed on at an upper portion of the mobile robot. In addition, the input unit 1200 may have a form of a touch screen together with the output unit 1500.

In one example, the output unit 1500 may be installed at the upper portion of the mobile robot. In one example, an installation position or an installation shape may vary. For example, the output unit 1500 may display a battery state, a travel scheme, and the like on a screen.

Moreover, the output unit 1500 may output mobile robot interior status information detected by the sensing unit 1400, for example, a current status of each component included in the mobile robot. In addition, the output unit 1500 may display external status information, the obstacle information, the position information, the map information, and the like detected by the sensing unit 1400 on the screen. The output unit 1500 may be formed of one of a light emitting diode (LED), a liquid crystal display (LCD), a plasma display panel, and an organic light emitting diode (OLED).

The output unit 1500 may further include sound output means for acoustically outputting an operation process or an operation result of the mobile robot performed by the controller 1800. For example, the output unit 1500 may output a warning sound to the outside in response to a warning signal generated by the controller 1800.

In this connection, the sound output means (not shown) may be means for outputting sound such as a beeper, a speaker, and the like. The output unit 1500 may output the sound to the outside through the sound output means using audio data, message data, or the like having a predetermined pattern stored in the memory 1700.

Accordingly, the mobile robot according to an embodiment of the present disclosure may output environment information on a travel region on the screen or output the environment information as a sound through the output unit 1500. According to another embodiment, the mobile robot may transmit the map information or the environment information to the terminal device through the communicator 1100 such that the terminal device outputs the screen or the sound to be output through the output unit 1500.

The memory 1700 stores a control program that controls or drives the autonomous cleaner and data from the control program. The memory 1700 may store audio information, image information, the obstacle information, the position information, the map information, and the like. Further, the memory 1700 may store information associated with a travel pattern.

The memory 1700 mainly uses a non-volatile memory. In this connection, the non-volatile memory (NVM, NVRAM) is a storage device that may keep stored information even when power is not supplied. For example, the non-volatile memory may be a ROM, a flash memory, a magnetic computer storage device (e.g., a hard disk, a diskette drive, and a magnetic tape), an optical disk drive, a magnetic RAM, a PRAM, and the like.

In one example, the sensing unit 1400 may include at least one of an external signal sensor, a front sensor, a cliff sensor, a two-dimensional camera sensor, and a three-dimensional camera sensor.

The external signal sensor may sense an external signal of the mobile robot. The external signal sensor may be, for example, an infrared ray sensor, an ultrasonic sensor, a radio frequency sensor (RF sensor), and the like.

The mobile robot may receive a guide signal generated by the charging device using the external signal sensor and identify a position and a direction of the charging device. In this connection, the charging device may transmit the guide signal indicating the direction and a distance such that the mobile robot may return. That is, the mobile robot may receive the signal from the charging device to determine the current position, and set a moving direction to return to the charging device.

In one example, the front sensors may be installed at certain spacings along a front face of the mobile robot, specifically along an outer circumferential side face of the mobile robot. The front sensor is located on at least one side face of the mobile robot, and is for sensing an obstacle ahead. The front sensor may sense an object, particularly an obstacle, present in the moving direction of the mobile robot and transmit the detection information to the controller 1800. That is, the front sensor may sense a protrusion, a fixture in the house, furniture, a wall face, a wall edge, and the like on a moving route of the mobile robot, and transmit the sensing information to the controller 1800.

The front sensor may be, for example, an infrared ray sensor, an ultrasonic sensor, an RF sensor, a geomagnetic sensor, and the like. The mobile robot may use one type of sensor or, when it is necessary, at least two types of sensors together as the front sensor.

As an example, the ultrasonic sensor may be mainly used to sense an obstacle at a long distance. The ultrasonic sensor has a transmitter and a receiver. Thus, the controller 1800 may determine whether the obstacle is present based on whether a ultrasonic wave emitted through the transmitter is reflected by the obstacle and the like and then received through the receiver, and calculate a distance from the obstacle using an ultrasonic wave emission time and an ultrasonic wave reception time.

Moreover, the controller 1800 may detect information associated with a size of the obstacle by comparing the ultrasound wave emitted from the transmitter and the ultrasound waves received through the receiver. For example, the controller 1800 may determine that the more ultrasonic waves are received in the receiver, the larger the obstacle size.

In one embodiment, a plurality of (e.g., five) ultrasonic sensors may be installed on side portions of the front face of the mobile robot along the outer circumferential face. In this connection, the ultrasonic sensor may be preferably installed on the front face of the mobile robot in a manner in which the transmitters and the receivers are alternately arranged.

That is, the transmitters may be arranged on left and right portions spaced apart from a center of the front face of the body. One or more transmitters may be arranged between the receivers to define a reception region of the ultrasonic signal reflected from the obstacle and the like. With such arrangement, the reception region may be expanded while reducing the number of sensors. A transmission angle of the ultrasonic wave may maintain an angle within a range that does not affect different signals to prevent a crosstalk phenomenon. Moreover, reception sensitivities of the receivers may be set differently from each other.

Moreover, the ultrasonic sensor may be installed upward by a certain angle such that the ultrasonic wave transmitted from the ultrasonic sensor is output upward. In this connection, a predetermined blocking member may be further included to prevent the ultrasonic wave from being emitted downward.

In one example, as described above, the front sensor may use at least two types of sensors together. Accordingly, the front sensor may use one of the infrared ray sensor, the ultrasonic sensor, the RF sensor, and the like.

As an example, the front sensor may include the infrared ray sensor as another type of sensor in addition to the ultrasonic sensor.

The infrared ray sensor may be installed on the outer circumferential face of the mobile robot together with the ultrasonic sensor. The infrared ray sensor may also sense an obstacle present in the front or the side and transmit obstacle information to the controller 1800. That is, the infrared ray sensor may sense the protrusion, the fixture in the house, the furniture, the wall face, the wall edge, and the like on the moving route of the mobile robot, and transmit the sensing information to the controller 1800. Therefore, the mobile robot may move within a specific region without collision of the body and the obstacle.

In one example, the cliff sensor may sense an obstacle on the floor that supports the body of the mobile robot mainly using various types of optical sensors.

That is, the cliff sensor is installed on a rear face of the mobile robot on the floor. In one example, the cliff sensor may be installed at a different position depending on a type of the mobile robot. The cliff sensor is located on the rear face of the mobile robot and is for sensing the obstacle on the floor. The cliff sensor may be an infrared ray sensor, an ultrasonic sensor, a RF sensor, a position sensitive detector (PSD) sensor, and the like equipped with a light emitter and a light receiver like the obstacle sensor.

For example, one of the cliff sensors may be installed at a front portion of the mobile robot, and the other two cliff sensors may be installed at a relatively rear portion thereof.

For example, the cliff sensor may be the PSD sensor, but may be composed of a plurality of different types of sensors.

The PSD sensor detects positions at short and long distances of incident light by one p-n junction using a semiconductor surface resistance. The PSD sensor includes a one-dimensional PSD sensor that detects light in only one axial direction, and a two-dimensional PSD sensor that may detect a position of light on a plane. Both may have a pin photodiode structure. The PSD sensor is a type of infrared ray sensor. The PSD sensor uses the infrared ray to measure a distance by transmitting the infrared ray and then measuring an angle of the infrared ray reflected from the obstacle and returned. That is, the PSD sensor calculates the distance from the obstacle using a triangulation method.

The PSD sensor includes a light emitter that emits the infrared ray on the obstacle, and a light receiver that receives the infrared ray reflected from the obstacle, and is generally formed in a module shape. When the obstacle is sensed using the PSD sensor, a stable measurement may be obtained regardless of a reflectance of the obstacle and a color difference.

The controller 1800 may measure an infrared ray angle between an emission signal of the infrared ray emitted by the cliff sensor toward the ground and a reflection signal of the infrared ray reflected by the obstacle and received to sense a cliff and analyze a depth of the cliff.

In one example, the controller 1800 may determine whether to pass the cliff based on a state of the ground of the cliff sensed using the cliff sensor, and may determine whether to pass the cliff based on the determination result.

For example, the controller 1800 determines the existence of the cliff and the depth of the cliff through the cliff sensor, and then passes the cliff only when the reflection signal is detected through the cliff sensor.

As another example, the controller 1800 may determine a lifting phenomenon of the mobile robot using the cliff sensor.

In one example, the two-dimensional camera sensor is disposed on one face of the mobile robot, and acquires the image information associated with the periphery of the body while moving.

An optical flow sensor converts a lower portion image input from the image sensor disposed in the sensing unit to generate image data in a predetermined format. The generated image data may be stored in the memory 1700.

Moreover, at least one light source may be installed adjacent to the optical flow sensor. The at least one light source irradiates light to a predetermined region on the floor face captured by the image sensor. That is, when the mobile robot moves on the specific region along the floor face, a constant distance is maintained between the image sensor and the floor face when the floor face is flat. On the other hand, when the mobile robot moves on a floor face of a non-uniform face, the image sensor and the floor face are away from each other by a distance equal to or greater than a certain distance due to an irregularity of the floor face and the obstacle. In this connection, the at least one light source may be controlled by the controller 1800 to control an amount of light being irradiated. The light source may be a light emitting device that may adjust the amount of light, for example, a light emitting diode (LED) and the like.

Using the optical flow sensor, the controller 1800 may detect the position of the mobile robot regardless of sliding of the mobile robot. The controller 1800 may calculate the moving distance and the moving direction by comparing and analyzing the image data captured by the optical flow sensor over time, and may calculate the position of the mobile robot based on the calculated moving distance and moving direction. Using the image information on the lower portion of the mobile robot using the optical flow sensor, the controller 1800 may correct the sliding robustly for the position of the mobile robot calculated by other means.

The 3-dimensional camera sensor is attached to one face or a portion of the body of the mobile robot to generate 3-dimensional coordinate information associated with the periphery of the body.

That is, the 3-dimensional camera sensor may be a 3-dimensional depth camera (3D depth camera) that calculates a distance between the mobile robot and an imaging target.

Specifically, the 3-dimensional camera sensor may image a 2-dimensional image associated with the periphery of the body, and may generate a plurality of 3-dimensional coordinate information corresponding to the captured 2-dimensional image.

In one embodiment, the 3-dimensional camera sensor may be formed in a stereo vision scheme in which at least two cameras that acquire the existing 2-dimensional images are arranged and at least two images respectively acquired from the at least two cameras are combined with each other to generate the 3-dimensional coordinate information.

Specifically, the 3-dimensional camera sensor according to the embodiment may include a first pattern irradiating unit that irradiates light of a first pattern downward toward the front of the body, a second pattern irradiating unit that irradiates light of a second pattern upward toward the front of the body, and an image acquisition unit that acquires an image of the front of the body. Thus, the image acquisition unit may acquire an image of a region into which the light of the first pattern and the light of the second pattern are incident.

In another embodiment, the 3-dimensional camera sensor is equipped with an infrared pattern emitter that irradiates an infrared pattern together with a single camera. A distance between the 3-dimensional camera sensor and the imaging target may be measured by capturing a shape of the infrared pattern irradiated from the infrared pattern emitter projected onto the imaging target. Such 3-dimensional camera sensor may be a 3-dimensional camera sensor of an infrared (IR) scheme.

In another embodiment, the 3-dimensional camera sensor is equipped with a light emitter that emits light together with the single camera. The 3-dimensional camera sensor may receive a portion reflected from the imaging target of laser emitted from the light emitter and analyze the received laser to measure the distance between the 3-dimensional camera sensor and the imaging target. Such 3-dimensional camera sensor may be a 3-dimensional camera sensor of a time of flight (TOF) scheme.

Specifically, the 3-dimensional camera sensor as above is configured to irradiate laser extending in at least one direction. In one example, the 3-dimensional camera sensor may include first and second lasers. The first laser may irradiate laser in a shape in which straight lines intersect each other, and the second laser may irradiate laser in a shape of a single straight line. Thus, the bottommost laser is used to sense an obstacle at the lower portion, the topmost laser is used to sense an obstacle at the upper portion, and middle laser between the bottommost laser and the topmost laser is used to sense an obstacle at a middle portion.

In one example, the communicator 1100 is connected to a terminal device and/or another device located in a specific region (herein, interchangeable with a term of "home appliance") in a scheme of one of wired, wireless, or satellite communication schemes, and transmits/receives signals and data thereto/therefrom.

The communicator 1100 may transmit and receive the data to and from another device located in the specific region. In this connection, another device may be any device that may be connected to a network to transmit and receive the data. For example, said another device may be a device such as an air conditioner, a heater, an air purifier, a lamp, a TV, a vehicle, and the like. Moreover, said another device may be a device that controls a door, a window, a water valve, a gas valve, and the like. Moreover, said another device may be a sensor that senses a temperature, a humidity, an air pressure, gas, and the like.

Moreover, the communicator 1100 may be in communication with another autonomous cleaners 100 located within the specific region or within a certain range.

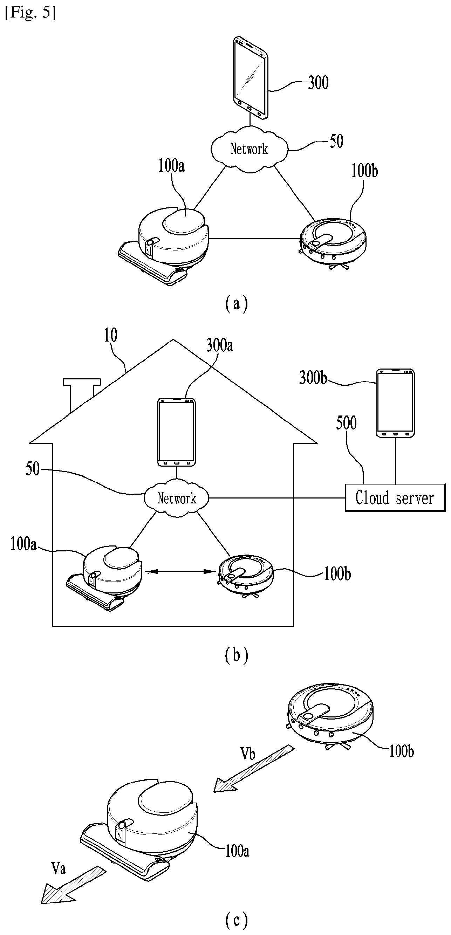

Referring to (a) and (b) in FIG. 5, a first autonomous cleaner 100a and a second autonomous cleaner 100b may exchange data with each other through network communication 50. Moreover, the first autonomous cleaner 100a and/or the second autonomous cleaner 100b may perform a cleaning-related operation or a corresponding operation by a control command received from a terminal 300 through the network communication 50 or another communication.

That is, although not shown, the plurality of autonomous cleaners 100a and 100b may be in communication with the terminal 300 through first network communication, and may be in communication with each other through second network communication.

In this connection, the network communication 50 may mean short-distance communication using at least one of wireless communication technologies such as a wireless LAN (WLAN), a wireless personal area network (WPAN), a wireless-fidelity (Wi-Fi), a wireless fidelity (Wi-Fi) direct, a digital living network alliance (DLNA), a wireless broadband (WiBro), a world interoperability for microwave access (WiMAX), a Zigbee, a Z-wave, a Blue-Tooth, a radio frequency identification (RFID), an infrared data association (IrDA), a ultrawide-band (UWB), a wireless universal serial bus (Wireless USB), and the like.

The illustrated network communication 50 may vary depending on a communication scheme of the autonomous cleaners to be communicated with each other.

(a) in FIG. 5, the first autonomous cleaner 100a and/or the second autonomous cleaner 100b may provide information respectively sensed through respective sensing units to the terminal 300 through the network communication 50. Moreover, the terminal 300 may transmit a control command generated based on the received information to the first autonomous cleaner 100a and/or the second autonomous cleaner 100b through the network communication 50.

Moreover, (a) in FIG. 5, a communicator of the first autonomous cleaner 100a and a communicator of the second autonomous cleaner 100b may be in wireless communication with each other directly or may be in wireless communication with each other indirectly through another router (not shown) and the like to identify information about a travel status, information about positions thereof, and the like.

In one example, the second autonomous cleaner 100b may perform travel and cleaning operations in response to a control command received from the first autonomous cleaner 100a. In this case, it may be said that the first autonomous cleaner 100a acts as a master cleaner and the second autonomous cleaner 100b acts as a slave cleaner. Alternatively, it may be said that the second autonomous cleaner 100b follows the first autonomous cleaner 100a. Alternatively, in some cases, it may be said that the first autonomous cleaner 100a and the second autonomous cleaner 100b cooperate with each other.

(b) in FIG. 5, a system including the plurality of cleaners 100a and 100b performing the autonomous travel according to an embodiment of the present disclosure will be described below.

Referring to (b) in FIG. 5, the cleaning system according to an embodiment of the present disclosure may include the plurality of cleaners 100a and 100b performing the autonomous travel, the network 50, a server 500, and a plurality of terminals 300a and 300b.

Among the components, the plurality of cleaners 100a and 100b, the network 50, and at least one terminal 300a may be placed in a building 10, and another terminal 300b and the server 500 may be located outside.

The plurality of cleaners 100a and 100b are cleaners that travel by themselves and perform the cleaning, which may perform the autonomous travel and autonomous cleaning. In addition to the travel function and the cleaning function, each of the plurality of cleaners 100a and 100b may include the communicator 1100 therein.

Moreover, the plurality of cleaners 100a and 100b, the server 500, and the plurality of terminals 300a and 300b may be connected to each other through the network 50 to exchange data with each other. To this end, although not shown, a wireless router such as an access point (AP) device and the like may be further included. In this case, the terminal 300a located in an internal network 10 may be connected to at least one of the plurality of cleaners 100a and 100b through the AP device to perform monitoring, remote control, and the like for the cleaner. Moreover, the terminal 300b located in an external network may also be connected to at least one of the plurality of cleaners 100a and 100b through the AP device to perform the monitoring, the remote control, and the like for the cleaner.

The server 500 may be in direct wireless communication with at least one of the plurality of cleaners 100a and 100b through the mobile terminal 300b. Alternatively, the server 500 may be connected to at least one of the plurality of cleaners 100a and 100b without through the mobile terminal 300b.

The server 500 may include a programmable processor, and may have various algorithms. For example, the server 500 may have algorithms associated with performing machine learning and/or data mining. For example, the server 500 may include a voice recognition algorithm. In this case, when receiving voice data, the server 500 may convert the received voice data into data in a text format and output the data in the text format.

The server 500 may store firmware information, traveling information (course information and the like) for the plurality of cleaners 100a and 100b, and register product information for the plurality of cleaners 100a and 100b. For example, the server 500 may be a server operated by a cleaner manufacturer or a server operated by a published application store operator.

In another example, the server 500 may be a home server that is provided in the internal network 10 to store status information about home appliances or to store content shared by the home appliances. When the server 500 is the home server, the server 500 may store information associated with the foreign substance, for example, an image of the foreign substance and the like.

In one example, the plurality of cleaners 100a and 100b may be wirelessly connected directly to each other through the Zigbee, the Z-wave, the Blue-Tooth, the ultra-wide band, and the like. In this case, the plurality of cleaners 100a and 100b may exchange the information about positions thereof, the travel information, and the like with each other.

In this connection, one of the plurality of cleaners 100a and 100b may become a master cleaner 100a and the other may become a slave cleaner 100b.

In this case, the first cleaner 100a may control travel and cleaning of the second cleaner 100b. In addition, the second cleaner 100b may perform the travel and the cleaning while following the first cleaner 100a. In this connection, the fact that the the second cleaner 100b follows the first cleaner 100a means that the second cleaner 100b travels and cleans by following the first cleaner 100a while maintaining a proper distance from the first cleaner 100a.

Referring to (c) in FIG. 5, the first cleaner 100a controls the second cleaner 100b such that the second cleaner 100b follows the first cleaner 100a.

To this end, the first cleaner 100a and the second cleaner 100b should be present in a specific region capable of mutual communication, and the second cleaner 100b should at least identify a relative position of the first cleaner 100a.

For example, the communicator of the first cleaner 100a and the communicator of the second cleaner 100b may exchange an IR signal, an ultrasonic signal, a carrier wave frequency, an impulse signal, and the like with each other, and analyze the same through the triangulation and the like to calculate displacements of the first cleaner 100a and the second cleaner 100b, thereby identifying relative positions of the first cleaner 100a and the second cleaner 100b. However, without being limited to such scheme, the communicator of the first cleaner 100a and the communicator of the second cleaner 100b may identify the relative positions of the first cleaner 100a and the second cleaner 100b through the triangulation and the like using one of the various wireless communication technologies described above.

When the first cleaner 100a recognizes the position thereof relative to the position of the second cleaner 100b, the second cleaner 100b may be controlled based on map information stored in the first cleaner 100a or map information stored in the server or the terminal. Moreover, the second cleaner 100b may share information on an obstacle sensed by the first cleaner 100a. Moreover, the second cleaner 100b may perform an operation by a control command (e.g., a control command associated with travel such as a traveling direction, a travel velocity, stop, and the like) received from the first cleaner 100a.

Specifically, the second cleaner 100b performs the cleaning while traveling along a traveling route of the first cleaner 100a. However, traveling directions of the first cleaner 100a and the second cleaner 100b do not always coincide. For example, when the first cleaner 100a linearly moves and turns in up/down/left/right direction, the second cleaner 100b linearly moves and turns in the up/down/left/right direction after a predetermined time, so that the traveling directions thereof may be different from each other.

Moreover, a travel velocity Va of the first cleaner 100a and a travel velocity Vb of the second cleaner 100b may be different from each other.

The first cleaner 100a may control the travel velocity Vb of the second cleaner 100b to vary in consideration of a distance at which the communication of the first cleaner 100a and the second cleaner 100b is possible. For example, when the first cleaner 100a and the second cleaner 100b are away from each other by a distance equal to or greater than a certain distance, the first cleaner 100a may control the travel velocity Vb of the second cleaner 100b to be increased than before. In addition, when the distance between the first cleaner 100a and the second cleaner 100b is equal to or less than a certain distance, the travel velocity Vb of the second cleaner 100b may be controlled to be decreased than before or to become zero for a predetermined time. Therefore, the second cleaner 100b may perform the cleaning while continuously following the first cleaner 100a.

In the present disclosure, sensors for reception may be respectively placed at rear and front portions of the first cleaner 100a, so that a controller of the first cleaner 100a may recognize a reception direction of an optical signal received from the second cleaner 100b in a manner of distinguishing the reception direction into a front direction and a rear direction. To this end, a UWB module may be disposed at the rear portion of the first cleaner 100a, and the UWB module or a plurality of optical sensors may be arranged at the front portion of the first cleaner 100a spaced apart from each other. The first cleaner 100a may recognize the reception direction of the optical signal received from the second cleaner 100b to determine whether the second cleaner 100b is following the first cleaner 100a at the rear of the first cleaner 100a or is reversed and positioned in front of the first cleaner 100a.

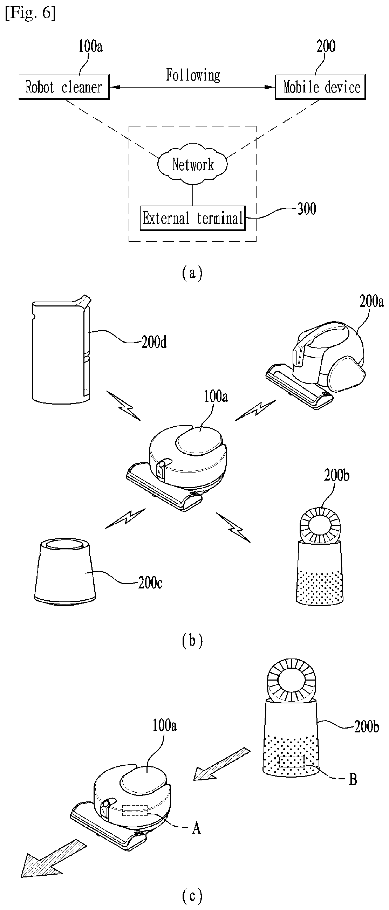

(a) in FIG. 6, (b) in FIG. 6, and (c) in FIG. 6 are a variation of following control between the first cleaner and the second cleaner according to the embodiments of the present disclosure described above. Herein, following control between the first cleaner and a mobile device will be described in detail. The following control herein only means that the mobile device travels while following a moving route of the first cleaner.

Referring to (a) in FIG. 6, the first cleaner 100a may be in communication with the mobile device 200 rather than with the second cleaner, and control following of the mobile device 200.

In this connection, the mobile device 200 may include any electronic device as long as the electronic device has the travel function without having the cleaning function. For example, the mobile device 200 may include all of unlimited various types of home devices or other electronic devices such as a dehumidifier, a humidifier, an air purifier, an air conditioner, a smart TV, an artificial intelligence speaker, a digital imaging devices, and the like.

In addition, the mobile device 200 is sufficient to have the travel function, which may not have a function of sensing an obstacle by itself or a navigation function of traveling to a determined destination.

The first cleaner 100a is a robot cleaner equipped with both the navigation function and the obstacle sensing function, which may control the following of the mobile device 200. The first cleaner 100a may be a dry cleaner or a wet cleaner.

The first cleaner 100a and the mobile device 200 may be in communication with each other through a network (not shown), but may be in communication with each other directly.

In this connection, the communication using the network may be, for example, the WLAN, the WPAN, the Wi-Fi, the Wi-Fi direct, the digital living network alliance (DLNA), the wireless broadband (WiBro), the world interoperability for microwave access (WiMAX), and the like. Further, the direct communication between the first cleaner 100a and the mobile device 200 may be performed using, for example, the ultrawide-band (UWB), the Zigbee, the Z-wave, the Blue-Tooth, the RFID, the infrared data association (IrDA), and the like.

When the first cleaner 100a and the mobile device 200 are in close proximity, the mobile device 200 is able to be set to follow the first cleaner 100a through manipulation on the first cleaner 100a.

When the first cleaner 100a and the mobile device 200 are away from each other, although not shown, the mobile device 200 may be set to follow the first cleaner 100a through manipulation on the external terminal 300 ((a) in FIG. 5).

Specifically, through network communication with the external terminal 300 ((a) in FIG. 5), a following relationship between the first cleaner 100a and the mobile device 200 may be established. In this connection, the external terminal 300 is an electronic device capable of wired/wireless communication, which may be, for example, a tablet, a smartphone, a laptop, and the like. The external terminal 300 may be installed with at least one application related to the following control by the first cleaner 100a (hereinafter, a 'following-related application'). The user may select and register the mobile device 200 to be following-controlled by the first cleaner 100a by executing the following-related application installed in the external terminal 300. When the mobile device 200 to be following-controlled is registered, the external terminal may recognize product information of the mobile device, and such product information may be provided to the first cleaner 100a through the network.

The external terminal 300 may be in communication with the first cleaner 100a and the registered mobile device 200, thereby identifying a position of the first cleaner 100a and a position of the registered mobile device 200. Thereafter, in response to a control signal transmitted from the external terminal 300, the first cleaner 100a travels to the position of the registered mobile device 200 or the registered mobile device 200 moves to the position of the first cleaner 100a. When it is sensed that the relative positions of the first cleaner 100a and the registered mobile device 200 are within the determined following distance described above, the following control of the mobile device 200 by the first cleaner 100a is started from that time point. Thereafter, the following control is performed by direct communication between the first cleaner 100a and the mobile device 200 without intervention of the external terminal 300.

Setting of such following control may be terminated by manipulation of the external terminal 300, or may be automatically terminated as the distance between the first cleaner 100a and the mobile device 200 is equal to or greater than the determined following distance.

The user may change, add, and remove the mobile device 200 to be controlled by the first cleaner 100a by manipulation through the first cleaner 100a or the external terminal 300. For example, referring to (b) in FIG. 6, the first cleaner 100a may perform following control on at least one mobile device 200 among another cleaner 200a or 100b, an air cleaner 200b, a humidifier 200c, and a dehumidifier 200d.

In general, because an original function, a product size, and a travel ability of the mobile device 200 are respectively different from a function, a size, and a travel ability of the first cleaner 100a, it is difficult for the mobile device 200 to follow the traveling route of the first cleaner 100a as it is. For example, there may be an exceptional situation in which it is difficult for the mobile device 200 to follow the traveling route of the first cleaner 100a depending on a travel mode, topographic characteristics of a space, a size of an obstacle, and the like. In consideration of such an exceptional situation, even when the mobile device 200 recognizes the traveling route of the first cleaner 100a, the mobile device 200 may travel by omitting a portion of the traveling route or wait. To this end, the first cleaner 100a may detect whether a current situation corresponds to the above-described exceptional situation, and may cause the mobile device 200 to store data corresponding to the traveling route of the first cleaner 100a in a memory and the like, and then to delete some of the stored data depending on the situation and travel or wait in a travel-stopped state.

(c) in FIG. 6 illustrates an example of following control of the first cleaner 100a and the mobile device 200, for example, the air cleaner 200b with the travel function. The first cleaner 100a and the air cleaner 200b may respectively have communication modules A and B for identifying relative positions thereof. The communication modules A and B may be one of modules that emit and receive the IR signal, the ultrasonic signal, the carrier wave frequency, or the impulse signal. The relative position identification through the communication modules A and B has been described in detail above, so that description will be omitted here. The air purifier 200b receives travel information corresponding to a travel command (e.g., travel change, travel stop, and the like including the travel command, a traveling direction, and a travel velocity) from the first cleaner 100a, travels based on the received travel information, and performs air purification. Accordingly, the air purification may be performed in real time for a cleaning space in which the first cleaner 100a operates. Moreover, because the first cleaner 100a identifies the product information of the mobile device 200, in the exceptional situation, the air cleaner 200b may be controlled to record the travel information of the first cleaner 100a, and to delete some of the information and travel or to wait in the travel-stopped state.

Hereinafter, a method for the plurality of robot cleaners according to an embodiment of the present disclosure to smoothly perform following control will be described in detail with reference to the accompanying drawings.

The first autonomous cleaner 100a according to the present disclosure is referred to as a first robot cleaner or first cleaner 100a, and the second autonomous cleaner 100b is referred to as a second robot cleaner or second cleaner 100b.

Moreover, in the present disclosure, the first cleaner 100a serves as a leading cleaner that travels ahead of the second cleaner 100b, and the second cleaner 100b serves as a following cleaner that follows the first cleaner 100a.

In the present disclosure, the first cleaner 100a and the second cleaner 100b may perform the travel and the cleaning while performing mutual following without user intervention.

In order for the second cleaner 100b to follow the first cleaner 100a, the second cleaner 100b needs to identify the relative position of the first cleaner 100a.

Moreover, in order to follow the first cleaner 100a, the second cleaner 100b may sense the position of the first cleaner 100a or the traveling route (or a moving route) traveled by the first cleaner 100a.

Hereinafter, a method for the second cleaner 100b to follow the first cleaner 100a will be described in more detail with reference to the accompanying drawings.

For convenience of description, herein, a function/an operation/a control method of the second cleaner 100b will be mainly described.

In this case, the first cleaner 100a may perform the cleaning while moving in a space in which the first cleaner 100a may travel based on a preset algorithm (e.g., a cleaning algorithm and a travel algorithm).

While the first cleaner 100a is moving, the second cleaner 100b may perform the following travel of moving (or cleaning) while following the first cleaner 100a.

Herein, the control method of the second cleaner 100b will be described, so that the second cleaner 100b will be referred to as a body or robot cleaner and the first cleaner 100a will be referred to as another cleaner.

The robot cleaner 100b according to the present disclosure includes a driver 1300 for linearly moving or turning the body, and a sensing unit 1400 for sensing another cleaner 100a in a sensed region having a predetermined angular range in front of the body.

Moreover, the robot cleaner 100b according to the present disclosure includes a controller 1800 that controls the driver 1300 based on information sensed through the sensing unit 1400.

Moreover, the controller 1800 controls the driver 1300 such that the body moves toward said another cleaner sensed in the sensed region.

Herein, the description that the control unit 1800 linearly moves the body or turns the body may mean that the driver 1300 is controlled such that the body is linearly moved or turned.

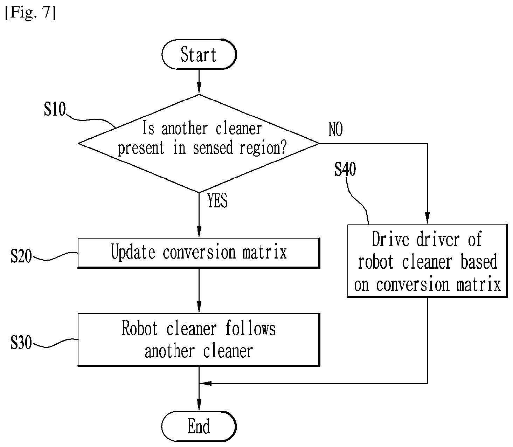

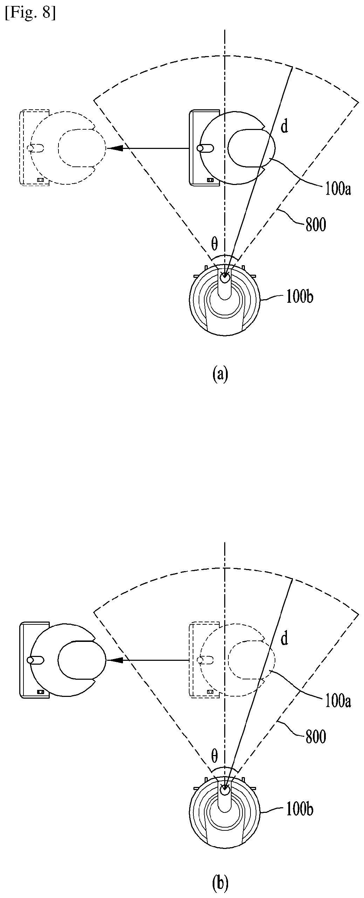

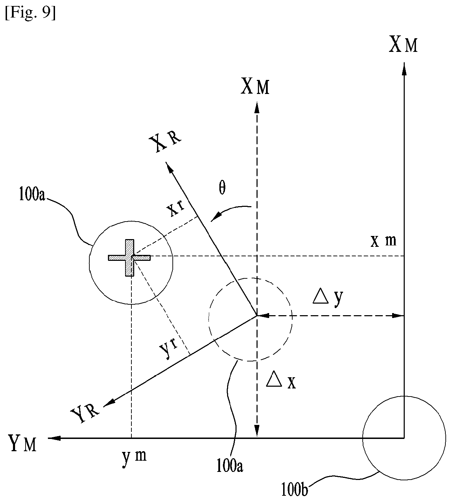

FIG. 7 is a flowchart for describing a control method according to an embodiment. In addition, FIG. 8 is a conceptual diagram for describing a control method shown in FIG. 7. In addition, FIG. 9 is a diagram for describing position determination in detail.

Referring to FIG. 8, the robot cleaner (second cleaner) 100b according to the present disclosure may include a sensing unit 1400 that senses said another cleaner (first cleaner) 100a present in a sensed region 800 having an angular range within a predetermined angle θ in front of the body (e.g., -n degrees to +n degrees (e.g., -45 degrees to +45 degrees) in front of the body).

Moreover, in the sensed region 800, the sensing unit may sense said another cleaner 100a present within a predetermined distance d.

The sensed region 800 may mean a region having the angular range within the predetermined angle θ and having a radius of the predetermined distance d. Moreover, the sensed region 800 may mean a region (range) in which predetermined information may be sensed by the sensing unit 1400.

The predetermined angle θ and the predetermined distance d of the sensed region 800 that may be sensed by the sensing unit 1400 may be determined based on a type of sensor performing the sensing in the sensing unit 1400 or may be determined/changed by user setting.

For example, the sensing unit 1400 may include at least one of the optical sensor, the laser (infrared ray) sensor, the ultrasonic sensor, a ultra wide band (UWB) sensor, one of wireless communication technologies (e.g., one of the Zigbee, the Z-wave, the Blue-Tooth, and the ultra-wide band), the external signal sensor, the front sensor, the cliff sensor, the 2D camera sensor, and the 3-dimensional camera sensor, and may be formed of a combination of at least two of those.

Moreover, when the sensing unit 1400 senses said another cleaner (or information associated with said another cleaner) in the sensed region using one of the wireless communication technologies, the sensing unit 1400 may include a communicator 1100 or may be replaced with the communicator 1100.

In the present disclosure, the second cleaner may be controlled to follow the first cleaner within a predetermined spacing range (or at a certain spacing). The predetermined spacing range (e.g., 50 to 70 cm) may fall within a range of the predetermined distance d (e.g., 2 to 100 m) of the sensed region 800. Thus, herein, for convenience of description, when describing the sensed region 800, a reference to the predetermined distance d of the sensed region will be omitted, and it will be described that the sensed region has the predetermined angular range in front of the body.

The controller 1800 may sense various information in the sensed region 800 through the sensing unit 1400.

For example, the controller 1800 may sense said another cleaner in the sensed region 800 or the information associated with said another cleaner in the sensed region 800 through the sensing unit 1400.

The information associated with said another cleaner may include relative positions of said another cleaner 100a and the body 100b, a travel route of said another cleaner 100a, a point (position) where said another cleaner 100a was located, a traveling direction of said another cleaner 100a, and the like.

Moreover, the information associated with said another cleaner may include information associated with a movement of said another cleaner (or information about the movement of said another cleaner).

The controller 1800 may sense said another cleaner in the sensed region having the predetermined angular range in front of the body (second cleaner 100b) through the sensing unit 1400 and control the driver 1300 such that the body moves toward the sensed another cleaner.

That is, the controller 1800 may control the driver 1300 to follow said another cleaner 100a sensed in the sensed region 800 through the sensing unit 1400.

In one example, said another cleaner 100a is the first cleaner 100a, which is the leading cleaner according to the present disclosure. Said another cleaner 100a may autonomously travel (move or clean) based on the preset algorithm.

Accordingly, the travel of said another cleaner 100a may cause said another cleaner 100a to leave the sensed region 800 of the robot cleaner (second cleaner) 100b. In this case, the robot cleaner 100b is not be able to sense said another cleaner 100a, so that the following may become difficult.

The present disclosure may provide a control method that enables the robot cleaner 100b to follow said another cleaner 100a smoothly even when such a situation occurs.

An embodiment will be described with reference to FIGS. 7 to 9.

Said another cleaner 100a and the robot cleaner 100b respectively have communicators, so that said another cleaner 100a and the robot cleaner 100b are in communication with each other through a network. In this connection, information of said another cleaner 100a is transmitted to the robot cleaner 100b through the network. Specifically, travel information of said another cleaner 100a is transmitted to the robot cleaner 100b, so that information about where the other cleaner 100a has moved from a previous position is transmitted to the robot cleaner 100b through the network. In this connection, map information of a place where said another cleaner 100a travels may not be transmitted to the robot cleaner 100b, and only information about a moved direction and a moved distance of said another cleaner 100a is transmitted.

In one example, unlike said another cleaner 100a and the robot cleaner 100b transmitting and receiving the information through the common network, the robot cleaner 100b may identify a current position of said another cleaner 100a based on a position of the robot cleaner 100b through the sensing unit. However, in this case, position information may be transmitted only when said another cleaner 100a is located in the sensed region 800 of the robot cleaner 100b.

When said another cleaner or the robot cleaner starts to travel, the controller 1800 of the robot cleaner 100b may determine whether said another cleaner 100a is present in the sensed region 800 (S10). In this connection, it is possible that said another cleaner 100a starts traveling or is in the middle of traveling.

As shown in (a) in FIG. 8, the controller 1800 of the robot cleaner 100b may sense said another cleaner (first cleaner) 100a within the sensed region 800 having the angular range within the predetermined angle θ in front of the robot cleaner 100b. In particular, the sensing unit 1400 of the robot cleaner is capable of receiving information by the UWB module installed in said another cleaner 100a. In this case, the UWB modules are respectively installed in both the robot cleaner 100b and said another cleaner 110a.

For example, said another cleaner 100a may continuously output a signal (e.g., an ultra wide band (UWB) signal, an infrared signal, a laser signal, an ultrasonic signal, and the like) such that the robot cleaner (second cleaner) 100b identifies the position of said another cleaner 100a.

The controller 1800 receives the signal through the sensing unit 1400 (or the communicator 1100) and determine the position (relative position) of said another cleaner 100a based on the signal.

For example, the controller 1800 may be configured to receive a signal received within the sensed region 800. The controller 1800 may determine the position (relative position) of said another cleaner 100a based on a fact that the signal (e.g., the ultra wide band (UWB) signal, the infrared signal, the laser signal, the ultrasonic signal, and the like) transmitted from another cleaner 100a present in the sensed region 800 is received through the sensed region 800.

The controller 1800 may determine the location of said another cleaner 100a in real time or at regular time periods. Moreover, the controller 1800 may determine (sense) the position of said another cleaner 100a not only when the robot cleaner 100b is stopped, but also when the robot cleaner 100b is moving (turning).

The position of said another cleaner 100a may be determined based on, for example, one point of said another cleaner, and generally, based on a center of said another cleaner. However, without being limited thereto, the position of said another cleaner 100a may be determined based on various points of said another cleaner.

For example, the controller 1800 may determine a position where the center of said another cleaner 100a is located as the position of said another cleaner 100a.

Moreover, the position of said another cleaner 100a is determined based on a point (region) where an antenna for transmitting the signal is located in said another cleaner 100a. In this case, the controller 1800 determines the position of said another cleaner 100a based on the point where the antenna transmitting the signal is located in said another cleaner 100a.

In one example, the controller 1800 controls the driver 1300 such that the body 100b faces said another cleaner 100a based on the signal received from said another cleaner 100a. For example, the controller 1800 determines the position of said another cleaner 100a (the center of said another cleaner or the point at which the antenna is located in said another cleaner) based on the signal transmitted from said another cleaner 100a, and control the driver 1300 such that the body of the robot cleaner 100b moves toward the point where said another cleaner 100a is located.

When the signal transmitted from said another cleaner 100a is able to be received by the sensing unit 1400 because said another cleaner 100a is in the sensed region 800 of the robot cleaner 100b, a conversion matrix is updated (S20).

In this connection, a conversion matrix H means an equation that converts a first coordinate representing a current position of said another cleaner 100a relative to a previous position of said another cleaner 100a to a second coordinate representing the current position of said another cleaner 100a relative to a current position of the body of the robot cleaner 100b. The conversion matrix H will be described in detail later with reference to FIG. 9.

In this connection, the conversion matrix may be updated at regular periods. In this connection, the period may mean a constant time interval or may mean a constant travel distance.

The conversion matrix is updated in S20, and the robot cleaner 100b follows said another cleaner 100a (S30). In this connection, the robot cleaner 100b is able to follow said another cleaner 100a by the conversion matrix. Otherwise, the robot cleaner 100b follows said another cleaner 100a using the signal received from said another cleaner 100a, not the conversion matrix. That is, when said another cleaner 100a is within the sensed region 800 of the robot cleaner 100b, the travel and the following of the robot cleaner 100b is performed based on the conversion matrix or the signal from said another cleaner 100a. The travel of the robot cleaner 100b is achieved by selecting one of the two schemes. However, when the conversion matrix is used, the robot cleaner 100b calculates traveling direction and distance of the robot cleaner 100b by multiplying the conversion matrix with the information associated with the travel of said another cleaner 100a through the network.

In one example, said another cleaner 100a may not be present in the sensed region 800 of the robot cleaner 100b in S10. In this case, as shown in (b) in FIG. 8, because said another cleaner 100a is located out of the sensed region 800 of the robot cleaner 100b, the signal transmitted from said another cleaner 100a is not sensed by the sensing unit 1400 of the robot cleaner.

Specifically, as shown in (b) in FIG. 8, the controller 1800 of the robot cleaner (second cleaner) 100b may sense, through the sensing unit 1400, that said another cleaner 100a sensed in the sensed region 800 is leaving the sensed region 800. For example, the controller 1800 receives the signal from said another cleaner 100a present in the sensed region 800, and then, when said another cleaner 100a is out of the sensed region 800, does not receive the signal transmitted from said another cleaner 100a.

When it is sensed (determined) that the signal is received and then is not received, the control unit 1800 may determine that said another cleaner 100a is out of the sensed region 800.

In this case, the robot cleaner 100b drives the driver 1300 of the robot cleaner 100b based on the conversion matrix (S40). When using the conversion matrix, the robot cleaner 100b may calculate the traveling direction and distance of the robot cleaner 100b by multiplying the conversion matrix with the information associated with the travel of the other cleaner 100a through the network. Therefore, even when said another cleaner 100a is not present in the sensed region 800 of the robot cleaner 100b, the robot cleaner 100b may follow said another cleaner 100a.

Thereafter, when the robot cleaner 100b continues to move, said another cleaner 100a is present in the sensed region 800 of the robot cleaner 100b, so that the signal transmitted from said another cleaner 100a may be sensed by the robot cleaner.

Hereinafter, the conversion matrix will be described in detail with reference to FIG. 9.

The conversion matrix H may mean the equation that converts the first coordinate representing the current position of said another cleaner 100a relative to the previous position of said another cleaner 100a to the second coordinate representing the current position of said another cleaner 100a relative to the current position of the body of the robot cleaner 100b.

In FIG. 9, the previous position of said another cleaner 100a is represented by a dotted line, and the current position of said another cleaner 100a is represented by a solid line. In addition, the position of the robot cleaner 100b is represented by the solid line.

The conversion matrix will be described as follows and will be represented as a 3X3 matrix in an equation below.

M (current position of another cleaner represented relative to robot cleaner [second coordinate]) = H (conversion matrix) X R (current position of another cleaner represented relative to previous position of another cleaner [first coordinate])

The conversion matrix may be represented as follows as a more detailed equation.

$$M = H \times R,$$

$$\begin{pmatrix} x_m \\ y_m \\ 1 \end{pmatrix} = \begin{pmatrix} \cos\Theta & -\sin\Theta & \Delta x \\ \sin\Theta & \cos\Theta & \Delta y \\ 0 & 0 & 1 \end{pmatrix} \begin{pmatrix} x_r \\ y_r \\ 1 \end{pmatrix}$$

in which Xr and Yr are the first coordinate, and Xm and Ym are the second coordinate.

The first coordinate is able to be calculated based on information provided from the driver that moves said another cleaner. The information provided from the driver of said another cleaner may be information derived from an encoder that measures rotation information of the motor that rotates the wheel that is corrected by a gyro sensor that senses the turning of said another cleaner.

The driver provides a driving force for linearly moving or turning said another cleaner. The first coordinate may be calculated even in a situation where the robot cleaner is not able to receive the signal provided from said another cleaner. Therefore, a relatively accurate position may be determined compared to position information calculated by transmission and reception of the signal between the two cleaners. Moreover, because the driver includes the information about the actual movement of said another cleaner, a change in the position of said another cleaner may be accurately described.

For example, even when the encoder senses that the motor is rotated, said another cleaner may accurately calculate the change in the position of said another cleaner by determining that said another cleaner is not moved but turned, using the gyro sensor. Even when the motor that rotates the wheel is rotated, said another cleaner is able to turn without moving, so that the position of said another cleaner is not always changed when the motor is rotated. Accordingly, when using the gyro sensor, a case in which the turning is only achieved without the change in the position of said another cleaner, a case in which the change in the position and the turning are achieved together, and a case in which only the change in the position is achieved without the turning may be distinguished. Therefore, said another cleaner may accurately calculate the first coordinate representing the current position converted from the previous position using the encoder and the gyro sensor. Further, such information may be transmitted to the network through the communicator of said another cleaner, and then may be transmitted to the robot cleaner 100b through the network.

The second coordinate is measured by the signal (e.g., the signal may be transmitted and received using the UWB module) transmitted and received between said another cleaner 100a and the robot cleaner 100b. The second coordinate may be calculated when the signal is transmitted because said another cleaner 100a is present in the sensed region 800 of the robot cleaner 100b.

With reference to FIG. 9, it may be seen that two coordinate values may be represented by an equal sign using H.

In one example, in order to obtain H, data when said another cleaner 100a is placed in the sensed region 800 of the robot cleaner 100b may be continuously accumulated. Such data will be represented as follows. When said another cleaner 100a is located in the sensed region 800, a lot of data is accumulated. In this connection, the data is a plurality of first coordinates and a plurality of second coordinates respectively corresponding to the plurality of first coordinates.

$$M = H X R, \quad \begin{bmatrix} x_{m_1} & x_{m_2} & x_{m_3} & \cdots \\ y_{m_1} & y_{m_2} & y_{m_3} & \cdots \\ 1 & 1 & 1 & \cdots \end{bmatrix} = H \begin{bmatrix} x_{r_1} & x_{r_2} & x_{r_3} & \cdots \\ y_{r_1} & y_{r_2} & y_{r_3} & \cdots \\ 1 & 1 & 1 & \cdots \end{bmatrix}$$

a method of least squares is used to obtain H.

$$H = M \cdot R^T (R R^T)^{-1}$$

In one example, after calculating H, when the first and second coordinates are continuously obtained, H is newly calculated and updated. As an amount of data calculating H increases, H becomes to have a more reliable value.

Using the conversion matrix H thus calculated, the robot cleaner 100b follows said another cleaner 100a even when it is difficult for the robot cleaner 100b and said another cleaner 100a to directly transmit and receive the signal. The robot cleaner 100b is not able to directly receive the signal about the position of said another cleaner 100a through the sensing unit when said another cleaner 100a is temporarily out of the sensed region 800 of the robot cleaner 100b. At this time, the robot cleaner 100b calculates the position of said another cleaner relative to the position of the robot cleaner 100b by the conversion matrix using the travel information of said another cleaner 100a transmitted through the network.

When determining the position of said another cleaner by the conversion matrix, the robot cleaner 100b should receive the first coordinate corresponding to R through the communicator 1100 of the robot cleaner 100b. That is, because R and H are identified, M may be calculated. M is the position of said another cleaner 100a relative to the robot cleaner 100b. Therefore, the robot cleaner 100b may identify the relative position thereof relative to said another cleaner 100a, and the robot cleaner 100b may follow said another cleaner 100a.

In one example, based on the above-described technology, when one of the robot cleaner 100b and said another cleaner 100a firstly contacts a charging device thereof and then is charged, the other memorizes a position of the charging device of said one of those (a second coordinate or a first coordinate of the cleaner that is charged) and then moves to a charging device thereof. Because the other of those memorized the position, the robot cleaner 100b and said another cleaner 100a may be gathered for the following cleaning from the next cleaning even when said another cleaner 100a is out of the sensed region.

The present disclosure is not limited to the above-described embodiment. As may be seen from the appended claims, modifications may be made by those skilled in the art to which the present disclosure belongs, and such modifications are within the scope of the present disclosure.

**Claims**

1. A robot cleaner (100b) comprising:

   a driver (1300) for linearly moving or turning a body of the robot cleaner (100b);
   a sensor (1400) for sensing a further cleaner (100a) in a sensed region (800) having a predetermined angular range in front of the body;
   a communicator (1100) connectable to a network, wherein the communicator (1100) is configured to acquire travel information of the further cleaner (100a); and
   a controller (1800) the robot cleaner being **characterised in that**, when the further cleaner (100a) is in the sensed region (800) of the sensor (1400), the controller (1800) is configured to:
   identify a position of the robot cleaner (100b) relative to the further cleaner (100a) based on said sensing the further cleaner (100a);
   update (S20) a conversion matrix (H) based on the identified position and the travel information; and
   control the driver (1300) such that the body moves towards the further cleaner (100a) based on the identified position,
wherein when the further cleaner (100a) is out of the sensed region (800) of the sensor (1400), the controller (1800) is configured to identify a position of the robot cleaner (100b) relative to the further cleaner (100a) based on the travel information acquired by the communicator (1100) and the updated conversion matrix (H); and control the driver (1300) such that the body follows the further cleaner (100a) based on the identified position.

2. The robot cleaner (100b) of claim 1, wherein the controller (1800) is configured to control the driver (1300) of the robot cleaner (100b) such that the further cleaner (100a) is sensed in the sensed region (800).

3. The robot cleaner (100b) of claim 1, wherein the conversion matrix (H) is configured to convert a first coordinate to a second coordinate,

wherein the first coordinate represents a current position of the further cleaner (100a) relative to a previous position of the further cleaner (100a),
wherein the second coordinate represents the current position of the further cleaner (100a) relative to a current position of the body.

4. The robot cleaner (100b) of claim 3, wherein the second coordinate is calculated by information sensed by the sensor (1400).

5. The robot cleaner (100b) of claim 3, wherein the first coordinate is calculated based on information provided from a driver (1300) of the further cleaner (100a) for moving the further cleaner (100a).

6. The robot cleaner (100b) of claim 5, wherein the information provided from the driver (1300) of the further cleaner (100a) is information derived from an encoder for measuring rotation information of a motor for rotating a wheel corrected by a gyro sensor for sensing turning of the further cleaner (100a).

7. The robot cleaner (100b) of claim 3, wherein the conversion matrix (H) corresponds to a 3X3 matrix in a following Equation 1:

[Equation 1]

$$\begin{pmatrix} x_m \\ y_m \\ 1 \end{pmatrix} = \begin{pmatrix} \cos\Theta & -\sin\Theta & \Delta x \\ \sin\Theta & \cos\Theta & \Delta y \\ 0 & 0 & 1 \end{pmatrix} \begin{pmatrix} x_r \\ y_r \\ 1 \end{pmatrix}$$

Xr and Yr are the first coordinate, and Xm and Ym are the second coordinate.

8. The robot cleaner (100b) of claim 1, wherein the controller (1800) is configured to, when the further cleaner (100a) is sensed by the sensor (1400) because the further cleaner (100a) is not out of the sensed region (800), update the conversion matrix (H).

9. The robot cleaner (100b) of claim 8, wherein the controller (1800) is configured to periodically update the conversion matrix (H).

10. A method for controlling a robot cleaner (100b), the method comprising:

a first operation in which the robot cleaner (100b) determines whether a further robot cleaner (100a) is present in a sensed region (800) of a sensor (1400) of the robot cleaner (100b); and
a second operation including:

when the further robot cleaner (100a) is present in the sensed region (800) of the sensor (1400), a controller (1800) is configured to identify a position of the robot cleaner (100b) relative to the further cleaner (100a) based on sensing the further cleaner (100a), update (S20) a conversion matrix (H) based on the identified position and travel information and control a driver (1300) of the robot cleaner (100b) such that a body of the robot cleaner (100b) follows the further robot cleaner (100a) based on information acquired from the sensor (1400);

when the further robot cleaner (100a) is not present in the sensed region (800) of the robot cleaner (100b), the controller (1800) is configured to identify a position of the robot cleaner (100b) relative to the further robot cleaner (100a) based on travel information acquired from a communicator (1100) of the robot cleaner (100b), and based on the updated conversion matrix (H), wherein the communicator (1100) is connected to a network to receive travel information of the further robot cleaner (100a); and

control the driver (1300) of the robot cleaner (100b) based on the identified position, such that the body of the robot cleaner (100b) follows the further cleaner (100a).

11. The method of claim 10, wherein the second operation includes controlling the driver (1300) of the robot cleaner (100b) such that the further robot cleaner (100a) is sensed in the sensed region (800).

12. The method of claim 10, wherein the conversion matrix (H) is configured to convert a first coordinate to a second coordinate,

wherein the first coordinate represents a current position of the further cleaner (100a) relative to a previous position of the further cleaner (100a),

wherein the second coordinate represents the current position of the further cleaner (100a) relative to a current position of the body.

13. The method of claim 12, wherein the second coordinate is calculated by the information sensed by the sensor (1400).

14. The method of claim 12, wherein the first coordinate is calculated based on information provided from a driver (1300) of the further cleaner (300a) for moving the further cleaner (300a).

15. The method of claim 12, wherein the conversion matrix (H) corresponds to a 3 × 3 matrix in a following Equation 2:

[Equation 2]

$$\begin{pmatrix} x_m \\ y_m \\ 1 \end{pmatrix} = \begin{pmatrix} \cos\Theta & -\sin\Theta & \Delta x \\ \sin\Theta & \cos\Theta & \Delta y \\ 0 & 0 & 1 \end{pmatrix} \begin{pmatrix} x_r \\ y_r \\ 1 \end{pmatrix}$$

Xr and Yr are the first coordinate, and Xm and Ym are the second coordinate.

**Patentansprüche**

1. Reinigungsroboter (100b), der Folgendes umfasst:

eine Antriebsvorrichtung (1300) zum geradlinigen Bewegen oder zum Drehen eines Körpers des Reinigungsroboters (100b);

einen Sensor (1400) zum Erfassen einer weiteren Reinigungsvorrichtung (100a) in einem erfassten Bereich (800), der einen vorgegebenen Winkelbereich vor dem Körper aufweist;

eine Kommunikationsvorrichtung (1100), die mit einem Netz verbunden werden kann, wobei die Kommunikationsvorrichtung (1100) konfiguriert ist, Fahrinformationen der weiteren Reinigungsvorrichtung (100a) zu erfassen; und

eine Steuereinrichtung (1800);

wobei der Reinigungsroboter (100b) **dadurch gekennzeichnet ist, dass** dann, wenn sich die weitere Reinigungsvorrichtung (100a) in dem erfassten Bereich (800) des Sensors (1400) befindet, die Steuereinrichtung (1800) konfiguriert ist:

basierend auf dem Erfassen der zweiten Reinigungsvorrichtung (100a) eine Position des Reinigungsroboters (100b) relativ zu der weiteren Reinigungsvorrichtung (100a) zu identifizieren;

basierend auf der identifizierten Position und den Fahrinformationen eine Umrechnungsmatrix (H) zu aktualisieren (S20); und

die Antriebsvorrichtung (1300) basierend auf der identifizierten Position derart zu steuern, dass sich der Körper in Richtung der weiteren Reinigungsvorrichtung (100a) bewegt,

wobei die Steuereinrichtung (1800) konfiguriert ist, dann, wenn sich die weitere Reinigungsvorrichtung (100a) außerhalb des erfassten Bereichs (800) des Sensors (1400) befindet, basierend auf den Fahrinformationen, die von der Kommunikationsvorrichtung (1100) erfasst worden sind, und der aktualisierten Umrechnungsmatrix (H) eine Position des Reinigungsroboters (100b) relativ zu der weiteren Reinigungsvorrichtung (100a) zu identifizieren; und

die Antriebsvorrichtung (1300) basierend auf der identifizierten Position derart zu steuern, dass der Körper der weiteren Reinigungsvorrichtung (100a) folgt.

2. Reinigungsroboter (100b) nach Anspruch 1, wobei die Steuereinrichtung (1800) konfiguriert ist, die Antriebsvorrichtung (1300) des Reinigungsroboters (100b) derart zu steuern, dass die weitere Reinigungsvorrichtung (100a) in dem erfassten Bereich (800) erfasst wird.

3. Reinigungsroboter (100b) nach Anspruch 1, wobei die Umrechnungsmatrix (H) konfiguriert ist, eine erste Koordinate in eine zweite Koordinate umzurechnen,

wobei die erste Koordinate eine aktuelle Position der weiteren Reinigungsvorrichtung (100a) relativ zu einer vorherigen Position der weiteren Reinigungsvorrichtung (100a) darstellt,

wobei die zweite Koordinate die aktuelle Position der weiteren Reinigungsvorrichtung (100a) relativ zu einer aktuellen Position des Körpers darstellt.

4. Reinigungsroboter (100b) nach Anspruch 3, wobei die zweite Koordinate mithilfe von Informationen, die von dem Sensor (1400) erfasst worden sind, berechnet wird.

5. Reinigungsroboter (100b) nach Anspruch 3, wobei die erste Koordinate basierend auf Informationen, die von einer Antriebsvorrichtung (1300) der weiteren Reinigungsvorrichtung (100a) bereitgestellt werden, berechnet wird, um die weitere Reinigungsvorrichtung (100a) zu bewegen.

6. Reinigungsroboter (100b) nach Anspruch 5, wobei die Informationen, die von der Antriebsvorrichtung (1300) der weiteren Reinigungsvorrichtung (100a) bereitgestellt werden, Informationen sind, die von einer Codiereinrichtung zum Messen von Rotationsinformationen eines Motors zum Rotieren eines Rads abgeleitet werden, korrigiert durch einen Kreiselsensor zum Erfassen des Drehens der weiteren Reinigungsvorrichtung (100a).

7. Reinigungsroboter (100b) nach Anspruch 3, wobei die Umrechnungsmatrix (H) einer $3 \times 3$-Matrix nach folgender Gleichung 1 entspricht:

$$\text{Gleichung } 1 :$$
$$\begin{pmatrix} X_m \\ Y_m \\ 1 \end{pmatrix} = \begin{pmatrix} cos(\theta) & -sin(\theta) & \Delta x \\ sin(\theta) & cos(\theta) & \Delta y \\ 0 & 0 & 1 \end{pmatrix} \begin{pmatrix} X_r \\ Y_r \\ 1 \end{pmatrix},$$

wobei $X_r$ und $Y_r$ die ersten Koordinaten sind, und $X_m$ und $Y_m$ die zweiten Koordinaten sind.

8. Reinigungsroboter (100b) nach Anspruch 1, wobei die Steuereinrichtung (1800) konfiguriert ist, dann, wenn die weitere Reinigungsvorrichtung (100a) von dem Sensor (1400) erfasst wird, weil sich die weitere Reinigungsvorrichtung (100a) nicht außerhalb des erfassten Bereichs (800) befindet, die Umrechnungsmatrix (H) zu aktualisieren.

9. Reinigungsroboter (100b) nach Anspruch 8, wobei die Steuereinrichtung (1800) konfiguriert ist, die Umrechnungsmatrix (H) periodisch zu aktualisieren.

10. Verfahren zum Steuern eines Reinigungsroboters (100b), wobei das Verfahren Folgendes umfasst:

einen ersten Arbeitsvorgang, in dem der Reinigungsroboter (100b) bestimmt, ob ein weiterer Reinigungsroboter (100a) in einem erfassten Bereich (800) eines Sensors (1400) des Reinigungsroboters (100b) anwesend ist; und

einen zweiten Arbeitsvorgang, der Folgendes enthält:

eine Steuereinrichtung (1800), die konfiguriert ist, dann, wenn der weitere Reinigungsroboter (100a) in dem erfassten Bereich (800) des Sensors (1400) anwesend ist, basierend auf dem Erfassen des weiteren Reinigungsroboters (100a) eine Position des Reinigungsroboters (100b) relativ zu dem weiteren Reinigungsroboter (100a) zu identifizieren, basierend auf der identifizierten Position und den Fahrinformationen eine Umrechnungsmatrix (H) zu aktualisieren (S20) und basierend auf Informationen, die von dem Sensor (1400) erfasst worden sind, eine Antriebsvorrichtung (1300) des Reinigungsroboters (100b) derart zu steuern, dass ein Körper des Reinigungsroboters (100b) dem weiteren Reinigungsroboter (100a) folgt;

wobei dann, wenn der weitere Reinigungsroboter (100a) nicht in dem erfassten Bereich (800) des Reinigungsroboters (100b) anwesend ist, die Steuereinrichtung (1800) konfiguriert ist, basierend auf den Fahrinformationen, die von einer Kommunikationsvorrichtung (1100) des Reinigungsroboters (1000b) erfasst worden sind, und basierend auf der aktualisierten Umrechnungsmatrix (H) eine Position des Reinigungsroboters (100b) relativ zu dem weiteren Reinigungsroboter (100a) zu identifizieren, wobei die Kommunikationsvorrichtung (1100) mit einem Netz verbunden ist, um Fahrinformationen des weiteren Reinigungsroboters (100a) zu empfangen; und

die Antriebsvorrichtung (1300) des Reinigungsroboters (100b) basierend auf der identifizierten Position derart zu steuern, dass der Körper des Reinigungsroboters (100b) dem weiteren Reinigungsroboter (100a) folgt.

11. Verfahren nach Anspruch 10, wobei der zweite Arbeitsvorgang das Steuern der Antriebsvorrichtung (1300) des Reinigungsroboters (100b) derart enthält, dass der weitere Reinigungsroboter (100a) in dem erfassten Bereich (800) erfasst wird.

12. Verfahren nach Anspruch 10, wobei die Umrechnungsmatrix (H) konfiguriert ist, eine erste Koordinate in eine zweite Koordinate umzurechnen,

wobei die erste Koordinate eine aktuelle Position der weiteren Reinigungsvorrichtung (100a) relativ zu einer vorherigen Position der weiteren Reinigungsvorrichtung (100a) darstellt,

wobei die zweite Koordinate die aktuelle Position der weiteren Reinigungsvorrichtung (100a) relativ zu einer aktuellen Position des Körpers darstellt.

13. Verfahren nach Anspruch 12, wobei die zweite Koordinate mithilfe von Informationen, die von dem Sensor (1400) erfasst worden sind, berechnet wird.

14. Verfahren nach Anspruch 12, wobei erste Koordinate basierend auf Informationen, die von einer Antriebsvorrichtung (1300) der weiteren Reinigungsvorrichtung (100a) bereitgestellt werden, berechnet wird, um die weitere Reinigungsvorrichtung (100a) zu bewegen.

15. Verfahren nach Anspruch 12, wobei die Umrechnungsmatrix (H) einer 3x3-Matrix nach folgender Gleichung 2 entspricht:

Gleichung 2:

$$\begin{pmatrix} X_m \\ Y_m \\ 1 \end{pmatrix} = \begin{pmatrix} cos(\theta) & -sin(\theta) & \Delta x \\ sin(\theta) & cos(\theta) & \Delta y \\ 0 & 0 & 1 \end{pmatrix} \begin{pmatrix} X_r \\ Y_r \\ 1 \end{pmatrix},$$

wobei $X_r$ und $Y_r$ die ersten Koordinaten sind, und $X_m$ und $Y_m$ die zweiten Koordinaten sind.

**Revendications**

1. Robot nettoyeur (100b) comportant :

un dispositif d'entraînement (1300) pour déplacer linéairement ou faire tourner un corps du robot nettoyeur (100b) ;

un capteur (1400) pour détecter un robot nettoyeur supplémentaire (100a) dans une zone détectée (800) ayant une plage angulaire prédéterminée devant le corps ;

un dispositif de communication (1100) pouvant être connecté à un réseau, dans lequel le dispositif de communication (1100) est configuré pour acquérir des informations de déplacement du robot nettoyeur supplémentaire (100a) ; et

une commande (1800)

le robot nettoyeur étant **caractérisé en ce que**

lorsque le robot nettoyeur supplémentaire (100a) est dans la zone détectée (800) du capteur (1400), la commande (1800) est configurée pour :

identifier une position du robot nettoyeur (100b) par rapport au robot nettoyeur supplémentaire (100a) sur la base de ladite détection du robot nettoyeur supplémentaire (100a) ;

mettre à jour (S20) une matrice de conversion (H) sur la base de la position identifiée et des informations de déplacement ; et

commander le dispositif d'entraînement (1300) de telle sorte que le corps se déplace vers le robot nettoyeur supplémentaire (100a) sur la base de la position identifiée,

dans lequel lorsque le robot nettoyeur supplémentaire (100a) est en dehors de la zone détectée (800) du capteur (1400), la commande (1800) est configurée pour identifier une position du robot nettoyeur (100b) par rapport au robot nettoyeur supplémentaire (100a) sur la base des informations de déplacement acquises par le dispositif de communication (1100) et de la matrice de conversion (H) mise à jour ; et

commander le dispositif d'entraînement (1300) de telle sorte que le corps suit le robot nettoyeur supplémentaire (100a) sur la base de la position identifiée.

2. Robot nettoyeur (100b) selon la revendication 1, dans lequel la commande (1800) est configurée pour commander le dispositif d'entraînement (1300) du robot nettoyeur (100b) de telle sorte que le robot nettoyeur supplémentaire (100a) est détecté dans la zone détectée (800).

3. Robot nettoyeur (100b) selon la revendication 1, dans lequel la matrice de conversion (H) est configurée pour convertir une première coordonnée en une seconde coordonnée,

dans lequel la première coordonnée représente une position actuelle du robot nettoyeur supplémentaire (100a) par rapport à une position précédente du robot nettoyeur supplémentaire (100a),

dans lequel la seconde coordonnée représente la position actuelle du robot nettoyeur supplémentaire (100a) par rapport à une position actuelle du corps.

4. Robot nettoyeur (100b) selon la revendication 3, dans lequel la seconde coordonnée est calculée par des informations détectées par le capteur (1400).

5. Robot nettoyeur (100b) selon la revendication 3, dans lequel la première coordonnée est calculée sur la base d'informations fournies à partir d'un dispositif d'entraînement (1300) du robot nettoyeur supplémentaire (100a) pour déplacer le robot nettoyeur supplémentaire (100a).

6. Robot nettoyeur (100b) selon la revendication 5, dans lequel les informations fournies à partir du dispositif d'entraînement (1300) du robot nettoyeur supplémentaire (100a) sont des informations dérivées d'un codeur pour mesurer des informations de rotation d'un moteur destiné à faire tourner une roue, corrigées par un capteur gyroscopique pour détecter la rotation du robot nettoyeur supplémentaire (100a).

7. Robot nettoyeur (100b) selon la revendication 3, dans lequel la matrice de conversion (H) correspond à une matrice $3 \times 3$ dans une Équation 1 suivante :

[Équation 1]

$$\begin{pmatrix} x_m \\ y_m \\ 1 \end{pmatrix} = \begin{pmatrix} \cos\Theta & -\sin\Theta & \Delta x \\ \sin\Theta & \cos\Theta & \Delta y \\ 0 & 0 & 1 \end{pmatrix} \begin{pmatrix} x_r \\ y_r \\ 1 \end{pmatrix}$$

Xr et Yr sont la première coordonnée, et Xm et Ym sont la seconde coordonnée.

8.  Robot nettoyeur (100b) selon la revendication 1, dans lequel la commande (1800) est configurée pour, lorsque le robot nettoyeur supplémentaire (100a) est détecté par le capteur (1400) parce que le robot nettoyeur supplémentaire (100a) n'est pas en dehors de la zone détectée (800), mettre à jour la matrice de conversion (H).

9.  Robot nettoyeur (100b) selon la revendication 8, dans lequel la commande (1800) est configurée pour mettre à jour périodiquement la matrice de conversion (H).

10. Procédé pour commander un robot nettoyeur (100b), le procédé comportant :

    une première opération pendant laquelle le robot nettoyeur (100b) détermine si un robot nettoyeur supplémentaire (100a) est présent dans une zone détectée (800) d'un capteur (1400) du robot nettoyeur (100b) ; et une seconde opération incluant :

    lorsque le robot nettoyeur supplémentaire (100a) est présent dans la zone détectée (800) du capteur (1400), une commande (1800) est configurée pour identifier une position du robot nettoyeur (100b) par rapport au robot nettoyeur supplémentaire (100a) sur la base de la détection du robot nettoyeur supplémentaire (100a), mettre à jour (S20) une matrice de conversion (H) sur la base de la position identifiée et des informations de déplacement et commander un dispositif d'entraînement (1300) du robot nettoyeur (100b) de telle sorte qu'un corps du robot nettoyeur (100b) suit le robot nettoyeur supplémentaire (100a) sur la base d'informations acquises à partir du capteur (1400) ;
    lorsque le robot nettoyeur supplémentaire (100a) n'est pas présent dans la zone détectée (800) du robot nettoyeur (100b), la commande (1800) est configurée pour identifier une position du robot nettoyeur (100b) par rapport au robot nettoyeur supplémentaire (100a) sur la base d'informations de déplacement acquises à partir d'un dispositif de communication (1100) du robot nettoyeur (100b), et sur la base de la matrice de conversion (H) mise à jour, dans lequel le dispositif de communication (1100) est connecté à un réseau pour recevoir des informations de déplacement du robot nettoyeur supplémentaire (100a) ; et commander le dispositif d'entraînement (1300) du robot nettoyeur (100b) sur la base de la position identifiée, de telle sorte que le corps du robot nettoyeur (100b) suit le robot nettoyeur supplémentaire (100a).

11. Procédé selon la revendication 10, dans lequel la seconde opération inclut de commander le dispositif d'entraînement (1300) du robot nettoyeur (100b) de telle sorte que le robot nettoyeur supplémentaire (100a) est détecté dans la zone détectée (800).

12. Procédé selon la revendication 10, dans lequel la matrice de conversion (H) est configurée pour convertir une première coordonnée en une seconde coordonnée,

    dans lequel la première coordonnée représente une position actuelle du robot nettoyeur supplémentaire (100a) par rapport à une position précédente du robot nettoyeur supplémentaire (100a),
    dans lequel la seconde coordonnée représente la position actuelle du robot nettoyeur supplémentaire (100a) par rapport à une position actuelle du corps.

13. Procédé selon la revendication 12, dans lequel la seconde coordonnée est calculée par les informations détectées par le capteur (1400).

14. Procédé selon la revendication 12, dans lequel la première coordonnée est calculée sur la base d'informations fournies à partir d'un dispositif d'entraînement (1300) du robot nettoyeur supplémentaire (300a) pour déplacer le robot nettoyeur supplémentaire (300a).

15. Procédé selon la revendication 12, dans lequel la matrice de conversion (H) correspond à une matrice $3 \times 3$ dans une Équation 2 suivante :

[Équation 2]

$$\begin{pmatrix} x_m \\ y_m \\ 1 \end{pmatrix} = \begin{pmatrix} \cos\Theta & -\sin\Theta & \Delta x \\ \sin\Theta & \cos\Theta & \Delta y \\ 0 & 0 & 1 \end{pmatrix} \begin{pmatrix} x_r \\ y_r \\ 1 \end{pmatrix}$$

Xr et Yr sont la première coordonnée, et Xm et Ym sont la seconde coordonnée.

[Fig. 1]

[Fig. 2]

[Fig. 3]

[Fig. 4]

[Fig. 5]

( a )

( b )

( c )

[Fig. 6]

(a)

(b)

(c)

[Fig. 7]

```
                    ┌─────────────┐
                    │    Start    │
                    └──────┬──────┘
                           │
                           ▼
  S10                    ◇◇◇◇◇◇◇◇◇◇◇◇
         ╱‾‾‾‾‾‾‾‾‾‾‾‾‾‾‾‾‾‾‾‾‾‾‾‾‾‾‾╲      NO
        ╱    Is another cleaner       ╲ ──────────────┐
        ╲  present in sensed region?  ╱                │
         ╲_____╱      S40        │
                           │                           │
                          YES                          │
                           │                           ▼
                           ▼              ┌──────────────────────┐
  S20   ┌──────────────────────────┐      │    Drive driver of   │
        │ Update conversion matrix │      │ robot cleaner based  │
        └─────────────┬────────────┘      │  on conversion matrix│
                      │                    └───────────┬──────────┘
                      ▼                                │
  S30   ┌──────────────────────────┐                  │
        │   Robot cleaner follows  │                  │
        │      another cleaner     │                  │
        └─────────────┬────────────┘                  │
                      │                                │
                      │◀───────────────────────────────┘
                      ▼
               ┌─────────────┐
               │     End     │
               └─────────────┘
```

29

[Fig. 8]

(a)

(b)

[Fig. 9]

**EP 4 041 041 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017036532 A
- US 2015297052 A1
- WO 2019031168 A1